# EUROPÄISCHE PATENTANMELDUNG

(11) **EP 0 810 259 A1**
(43) Veröffentlichungstag der Anmeldung: **03.12.1997**
(21) Anmeldenummer: 97108006.4
(22) Anmeldetag: 16.05.1997
(51) Int. Cl.: C08K 3/22, C08J 5/18

(54) **Polyamidformmassen enthaltend nanodisperse Füllstoffe, sowie Folien oder Hohlkörper enthaltend eine entsprechende Polyamidschicht**

(30) Priorität: 28.05.1996 DE 19621308
(71) Anmelder: BAYER AG, 51368 Leverkusen (DE); INSTITUT FÜR NEUE MATERIALIEN GEM. GMBH, 66123 Saarbrücken (DE)
(72) Erfinder: Gittinger, Andreas, Dr., 47800 Krefeld (DE); Joachimi, Detlev, Dr., 47800 Krefeld (DE); Idel, Karsten-Josef, Dr., 47802 Krefeld (DE); Zaby, Gottfried, Dr., 51375 Leverkusen (DE); Nonninger, Ralph, Dr., 66129 Saarbrücken (DE); Nass, Rüdiger, Dr., 66292 Riegelsberg (DE); Schmidt, Helmut, Dr., 66130 Saarbrücken (DE)
(74) Vertreter: Klimiuk-Japadita, Meike

(57) **Zusammenfassung**

Die Erfindung betrifft Formmassen aus Polyamiden, die nanodisperse Füllstoffe enthalten, sowie Formkörper, ein- oder mehrschichtige Folien oder Hohlkörper, enthaltend mindestens eine Polyamidschicht, welche diese nanodisperse Füllstoffe enthält, und hieraus hergestellte Verpackungen sowie die Verwendung der Formmassen zur Herstellung von Formkörpern, Folien oder Hohlkörpern.

## Beschreibung

Die Erfindung betrifft Formmassen aus Polyamiden, die nanodisperse Füllstoffe enthalten, sowie ein- oder mehrschichtige Folien oder Hohlkörper, enthaltend mindestens - eine Polyamidschicht, welche diese nanodisperse Füllstoffe enthält, und hieraus hergestellte Verpackungen.

Polyamide zeichnen sich durch eine Vielzahl vorteilhafter Eigenschaften wie z.B. hohe Zähigkeit, hohe Temperaturbeständigkeit u.a. aus, die ihnen im Bereich der technischen Thermoplaste einen festen Platz im Markt sichern. Diese Basiseigenschaften des Polymeren werden im allgemeinen durch die Zugabe von Zusatzstoffen oder Additiven modifiziert. Polymeres und Additive zusammen ergeben die sogenannte Formmasse. Polyamidformmassen kommen in vielen Anwendungen zum Einsatz. Beispielhaft genannt seien Spritzgußteile z.B. für den Automobilmarkt oder Extrudate wie Folien oder Hohlkörper für den Verpackungsbereich.

Folien und Hohlkörper, die eine Polyamidschicht enthalten, zeichnen sich durch eine Vielzahl vorteilhafter Eigenschaften aus. Zu nennen sind insbesondere gute optische Eigenschaften wie hohe Transparenz im Falle nicht eingefärbter Folien bzw. Hohlkörper und hoher Glanz. Außerdem von Bedeutung sind die guten mechanischen Eigenschaften wie hohe Zähigkeit, hohe Durchstoßfestigkeit, hohe Weiterreißfestigkeit und andere. Hinzu kommt eine einfache Herstellbarkeit und einfache Weiterverarbeitbarkeit.

Von besonderer Bedeutung für viele Einsatzgebiete für Folien und Hohlkörper, insbesondere für den Einsatz im Verpackungssektor ist eine niedrige Durchlässigkeit für Sauerstoff Wasserdampf Kohlendioxid, Fette, Aromastoffe und andere wesentliche Komponenten des verpackten Gutes bzw. für Stoffe, die vom verpackten Gut ferngehalten werden sollen.

In vielen Fällen werden die formulierten Anforderungen an Folien oder Hohlkörper durch die Kombination verschiedener Materialien in einem mehrschichtigen Verbund realisiert. Die genannte niedrige Durchlässigkeit gegenüber Sauerstoff wird in einem solchen Verbund entweder von der Polyamidschicht beigesteuert, oder es werden zusätzlich Schichten sogenannter Hochbarrierematerialien wie z. B. Polyvinylidenchlorid oder Ethylen-Vinylalkohol-Copolymere (im allgemeinen unter der Kurzbezeichnung EVAL bekannt) eingesetzt.

Der Einsatz von Hochbarriereschichten hat vielfältige Nachteile. So ist der Halogenanteil im Polyvinylidenchlorid häufig unerwünscht. Außerdem sind die Hochbarrierematerialien vielfach teuer, schwer verfügbar und weisen Nachteile in der Verarbeitbarkeit wie z. B. geringe Temperaturbeständigkeit auf.

Beim Verzicht auf Hochbarriereschichten aufgrund ihrer aufgeführten Nachteile kann eine geringe Sauerstoffdurchlässigkeit einer Mehrschichtverbundfolie oder eines Mehrschichtverbundhohlkörpers in gewissem Ausmaß durch eine Polyamidschicht gewährleistet werden. Allerdings ist die Barrierewirkung von Polyamid gegenüber Sauerstoff häufig zu gering, falls es in einer Schichtdicke eingesetzt wird, wie sie zur Gewährleistung ausreichender mechanischer Eigenschaften einer Mehrschichtverbundfolie oder eines Mehrschichtverbundhohlkörpers erforderlich ist. Der Einsatz des Polyamides in höheren Schichtdicken, allein um eine ausreichende Sauerstoffbarriere zu erhalten, verbietet sich in der Regel aus Kostengründen.

EP-A 358 415 beschreibt Folien aus Polyamiden, die Schichtsilikate enthalten und die aufgrund des Schichtsilikates eine gesteigerte Sauerstoffbarriere besitzen. Der in EP-A 358 415 in den Beispielen beschriebene Montmorillonit kann aber nur nach einem sehr aufwendigen Verfahren in das Polyamid eingearbeitet werden (Montmorillonit muß vorab mit einem Quellmittel wie z. B. einer Aminosäure umgesetzt werden, bevor er in das Polyamid eingearbeitet werden kann).

Es bestand daher die Aufgabe, die beschriebene zu geringe Barrierewirkung des Polyamides gegenüber Sauerstoff durch eine geeignete Modifizierung des Polyamides zu erhöhen, ohne die anderen erwünschten Eigenschaften des Polyamides, insbesondere Transparenz, Glanz oder Zähigkeit, zu beeinträchtigen. Außerdem muß das modifizierte Polyamid auf einfache und kostengünstige Art und Weise herstellbar und verarbeitbar sein.

Überraschenderweise wurde nunmehr gefunden, daß Polyamide, denen Oxide oder Oxidhydrate oder Carbonate oder Sulfate bestimmter Elemente als Additive zugesetzt werden, die Aufgabe erfüllen, wenn die Additive eine ausreichend kleine Partikelgröße aufweisen. Mit derartigen Additiven versehene Polyamide weisen eine verringerte Sauerstoffdurchlässigkeit auf. Die übrigen vorteilhaften Eigenschaften der Polyamide wie z. B. Transparenz, Glanz und Zähigkeit bleiben aber in ausreichendem Maße erhalten.

Gegenstand der Erfindung sind thermoplastische Formmassen enthaltend Polyamid und nanodisperse Füllstoffe ausgewählt aus der Gruppe der Oxide, Oxidhydrate, Carbonate oder Sulfate von Metallen oder Halbmetallen.

Gegenstand der Erfindung ist ebenfalls die Verwendung der Polyamid-Formmassen zur Herstellung von Formkörpern, insbesondere Folien oder Hohlkörper, sowie die Formkörper.

Gegenstand der Erfindung sind weiterhin ein- oder mehrschichtige Folien oder Hohlkörper enthaltend mindestens eine Polyamidschicht, wobei die Polyamidschicht nanodisperse Füllstoffe ausgewählt aus der Gruppe der Oxide, Oxidhydrate von Metallen oder Halbmetallen.

Gegenstand der Erfindung sind außerdem Verpackungen aus einer erfindungsgemäßen Folie oder einem erfindungsgemäßen Hohlkörper.

Bevorzugt werden Oxide oder Oxidhydrate eines Elementes ausgewählt aus der Gruppe Bor, Aluminium, Gallium, Indium, Silizium, Zinn, Titan, Zirkonium, Zink, Ytrium oder Eisen eingesetzt.

Besonders bevorzugt wird Siliziumdioxid eingesetzt. Unter Siliziumdioxid sind auch Siliziumdioxidhydrate, die sich durch einpolymerisieren von Kieselsolen in Polyamid ergeben, zu verstehen.

Die mittlere Partikelgröße des genannten in der Polyamidschicht enthaltenen Füllstoffes beträgt weniger als 1 Mikrometer. Bevorzugt beträgt die mittlere Partikelgröße des genannten Füllstoffes weniger als 100 Nanometer. Besonders bevorzugt beträgt die mittlere Partikelgröße des genannten Füllstoffes weniger als 50 Nanometer. In der Regel haben die Teilchen eine Größe von mindestens 0,5 nm.

Die Bestimmung der mittleren Partikelgröße erfolgt z.B. durch visuelle Beurteilung transmissionselektronenmikroskopischer Aufnahmen von Ultradünnschnitten der entsprechenden Formmassen. Falls die Partikel stark anisotrop sind, ist unter der Partikelgröße die Abmessung der kleinsten auftretenden Achse zu verstehen (z. B. ist im Falle plättchenförmiger Partikel unter der Partikelgröße die Plättchendicke zu verstehen).

Die genannten Füllstoffe werden in einer Konzentration von 0,1 bis 10 Gewichtsprozent bezogen auf die Gesamtmasse der Polyamidschicht eingesetzt. Unter der Gesamtmasse der Polyamidschicht ist die Summe der Masse des in dieser Schicht enthaltenen Polyamides und der Masse des in dieser Schicht enthaltenen Füllstoffes der genannten Art sowie gegebenenfalls der Masse weiterer in dieser Schicht enthaltener Zusatzstoffe zu verstehen. Bevorzugt werden die genannten Füllstoffe in einer Konzentration von 0,5 bis 5 Gewichtsprozent eingesetzt. Besonders bevorzugt werden die genannten Füllstoffe in einer Konzentration von 1 bis 3 Gewichtsprozent eingesetzt.

Bei dem Polyamid, das in der Polyamidschicht der erfindungsgemäßen Folien oder Hohlkörper enthalten ist, handelt es sich um ein bekanntes aliphatisches oder aromatisches oder teilaromatisches Homopolyamid oder Copolyamid oder um eine Mischung aus mehreren Polyamiden. Bevorzugt eingesetzt werden Polyamid 6 oder Polyamid 11 oder Polyamid 12 oder Polyamid 6,6 oder Polyamid 4,6 oder Polyamid 6,10 oder ein Copolyamid aus den Einheiten der genannten Homopolyamide oder ein Copolyamid aus Caprolactameinheiten und Einheiten abgeleitet von Hexamethylendiamin und Isophthalsäure oder ein Copolyamid aus Caprolactameinheiten und Einheiten abgeleitet von Isophorondiamin und Isophthalsäure. Besonders bevorzugt eingesetzt wird Polyamid 6 oder Polyamid 6,6 oder ein Copolyamid aus Caprolactameinheiten und Einheiten abgeleitet von Hexamethylendiamin und Adipinsäure.

Die erfindungsgemäßen Formmassen, Formkörper, Folien oder Hohlkörper können weitere bekannte Hilfsmittel oder Zusatzstoffe in den jeweils üblichen Mengen enthalten. Im Falle der Formkörper, Folien oder Hohlkörper können diese weiteren Hilfsmittel oder Zusatzstoffe in der Polyamidschicht enthalten sein, die die genannten Füllstoffe enthält, oder auch in den anderen Schichten der Folie. Beispielhaft für weitere Hilfsmittel und Zusatzstoffe seien die folgenden genannt: Verarbeitungshilfsmittel wie z. B. Gleitmittel, Nukleierungsmittel, Stabilisatoren, Antiblockingmittel, weitere Füllstoffe, faserförmige oder teilchenförmige Verstärkungsstoffe wie z. B. Glasfasern, Glaskugeln oder mineralische Füllstoffe, Schlagzähmodifikatoren wie z.B. Kautschuke oder Polyolefine, Flammschutzmittel, Farbstoffe oder Pigmente.

Die erfindungsgemäßen Folien oder Hohlkörper können aus nur einer Polyamidschicht bestehen oder einen mehrschichtigen Aufbau aufweisen. Im Falle des mehrschichtigen Aufbaues können die weiteren Schichten z.B. aus Polyolefinen wie z.B. Polyethylen oder Polyethylencopolymeren wie z.B. Copolymeren aus Ethylen und Acrylsäure oder Methacrylsäure oder Barrierepolymeren wie z.B. Polyvinylidenchlorid oder Copolymeren aus Ethylen und Vinylalkohol (EVAL oder EVOH genannt) bestehen.

Die erfindungsgemäßen Formkörper, Folien oder Hohlkörper werden in bekannter Weise z.B. durch Extrusion, Coextrusion, Beschichten, Kaschieren oder Blasformen hergestellt. Im Falle der Folien kann die Extrusion oder Coextrusion z.B. nach dem sogenannten Chill-roll-Verfahren oder nach dem Blasextrusionsverfahren bzw. Blascoextrusionsverfahren erfolgen. Bei mehrschichtigen Folien oder Hohlkörpern können die handelsüblichen Haftvermittler eingesetzt werden.

Der Rohstoff für die Polyamidschichten der erfindungsgemäßen Formmassen, Folien oder Hohlkörper kann in einem kontinuierlichen oder in einem diskontinuierlichen Verfahren in bekannter Weise hergestellt werden. Bei einem diskontinuierlichen Verfahren kann es sich z.B. um die Polymerisation in einem Autoklaven handeln. Bei einem kontinuierlichen Verfahren kann es sich z.B. um die Polymerisation in einem sogenannten VK-Rohr handeln. Bevorzugt erfolgt die Herstellung nach einem kontinuierlichen Verfahren. Zur Erreichung hoher Molmassen, wie sie für die Anwendung als Folienmaterial häufig erforderlich sind, kann der Polymerisation in Schmelze eine Nachkondensation in fester Phase nachgeschaltet sein. Die Zugabe der erfindungsgemäßen Füllstoffe kann vor, während oder nach der Polymerisation der Monomere zum Polyamid erfolgen. Erfolgt die Zugabe der erfindungsgemäßen Füllstoffe nach der Polymerisation, so erfolgt sie vorzugsweise durch Zugabe zur Polyamidschmelze in einem Extruder. Erfolgt die Zugabe der erfindungsgemäßen Füllstoffe vor oder während der Polymerisation, so kann die Polymerisation Phasen umfassen, in denen in Gegenwart von 1 bis 50 Gewichtsprozent Wasser gearbeitet wird.

Die erfindungsgemäßen Füllstoffe können bei der Zugabe schon als Partikel mit der letztendlich in der Formmasse auftretenden Partikelgröße vorliegen. Alternativ können die erfindungsgemäßen Füllstoffe in Form von Vorstufen zugegeben werden, aus denen die letztendlich in der Formmasse auftretenden Partikel erst im Laufe der Zugabe bzw. Einarbeitung entstehen. Diese Vorstufen können Hilfsstoffe enthalten, die z.B. dazu dienen, die Vorstufe zu stabilisieren oder die feinteilige Verteilung der Partikel in der Formmasse zu gewahrleisten. Solche Hilfsstoffe können z.B. Oberflächenmodifikatoren sein. Eine solche Vorstufe kann z.B. Kieselsol (auch unter dem Begriff Wasserglas bekannt) im Falle des Siliziumdioxids als erfindungsgemäßem Füllstoff sein. Im Falle des genannten Beispiels Kieselsol werden üblicherweise das Sol stabilisierende Hilfsstoffe wie z.B. Laugen wie Natronlauge oder Ammoniak eingesetzt. Diese Hilfsstoffe können nach dem Sol-Gel-Übergang in den entstehenden Partikeln verbleiben. Auch die aus solchen Solen entstehenden Partikel sollen im Rahmen der vorliegenden Schrift als Siliziumdioxid angesprochen werden.

Die erfindungsgemäßen Formmassen, Folien oder Hohlkörper können vor ihrem letztendlichen Einsatzzweck weiter bearbeitet oder umgeformt werden. So können die erfindungsgemäßen Folien z. B. tiefgezogen werden.

Die erfindungsgemäßen Folien oder Hohlkörper zeichnen sich im Vergleich zu anderen Folien oder Hohlkörpern, die nicht die erfindungsgemäßen Füllstoffe enthalten, durch besonders niedrige Permeationswerte für Sauerstoff und andere Gase und Aromastoffe aus. Die übrigen polyamidspezifischen Eigenschaften wie Glanz, Transparenz und Zähigkeit sind nicht oder nur unwesentlich beeinträchtigt. Die Herstellung und Verarbeitung der erfindungsgemäßen Folien oder Hohlkörper kann auf einfache und kostengünstige Weise nach bekannten Verfahren erfolgen.

Die erfindungsgemäßen Folien oder Hohlkörper können z.B. zu Verpackungszwecken eingesetzt werden. Erfindungsgemäße Folien oder Hohlkörper können z.B. zur Verpackung von Lebensmitteln, wie Fleisch und Fleischprodukten, Wurst, Käse, Getränken u.a. verwendet werden. Die erfindungsgemäßen Folien oder Hohlkörper können z.B. auch zur Verpackung von Kosmetika wie z.B. Sonnenschutzcremes oder Chemikalien wie z. B. Pflanzenschutzmittel verwendet werden. Des weiteren können die erfindungsgemäßen Hohlkörper als Leitungen oder Tanks dienen. Dabei kann es sich z.B. um Leitungen oder Tanks für Kraftstoffe oder Öle für Automobile handeln.

### Beispiele

### Herstellung des füllstoffhaltigen Polyamides, das zur Folienherstellung verwendet wurde:

In einem Autoklaven werden 7425 g Caprolactam, 1500 g Wasser und die im jeweiligen Beispiel angegebene Menge und Art Füllstoff unter Eigendruck 2 Stunden auf 240 °C erhitzt. Anschließend wird das Wasser bei dieser Temperatur durch Druckverminderung bis auf Atmosphärendruck verdampft. Danach wird die erhaltene Masse 4 Stunden bei 270°C polymerisiert. Das so erhaltene Polyamid wird mit Wasser extrahiert und getrocknet.

### Herstellung der Folien:

Aus dem nach oben beschriebenem Verfahren hergestellten Polyamid wird eine 50 Mikrometer dicke Flachfolie nach dem Chill roll Verfahren hergestellt (Massetemperatur: 260 °C, Gießwalzentemperatur: 90 °C).

### Bestimmung der Partikelgröße des Füllstoffes in den untersuchten Folien:

Die Bestimmung der Partikelgröße des Siliziumdioxides in der Polyamidfolie erfolgt durch visuelle Beurteilung transmissionselektronenmikroskopischer Aufnahmen. Falls die Partikel stark anisotrop sind, ist unter der Partikelgröße die Abmessung der kleinsten auftretenden Achse zu verstehen (z.B. ist im Falle plättchenförmiger Partikel unter der Partikelgröße die Plättchendicke zu verstehen).

| **Beispiel** | **Füllstoffart** | **Füllstoffmenge in g(Gew.-%)** | **Partikelgröße in nm** | **relative Lösungsviskosität des extrahierten Polymerisates (1 %, m-Kresol, 25 °C)** |
|---|---|---|---|---|
| 1 (Vergleich) | kein Füllstoff | - | - | 4,3 |
| 2 | Siliziumdioxid | 75(1 Gew.-%) | 5 | 4,7 |

| **Beispiel** | **Sauerstoffpermeationin (cm**^{**3**} **x 25,4 µm) / (m**^{**2**} **x 24 h x bar) bei einer relativen Meßgasfeuchte von:** | | | **Zugmodul nach DIN 53457 in MPa** | **Reißdehnung nach 53455 in %** | **Glanz nach DIN 67530 in Skalenteilen** | **Trübung nach ASTM D 1003-61 in %** |
|---|---|---|---|---|---|---|---|
| | **25 %** | **50 %** | **75 %** | | | | |
| 1 (Vergleich) | 40 | 46 | 69 | 948 | 151 | 97 | 4,4 |
| 2 | 31 | 36 | 53 | 623 | 270 | 78 | 4,6 |

## Patentansprüche

1. Thermoplastische Formmassen enthaltend Polyamide und nanodisperse Füllstoffe ausgewählt aus der Gruppe der Oxide, Oxidhydrate von Metallen oder Halbmetallen.

2. Formmassen gemäß Anspruch 1, wobei die nanodispersen Füllstoffe ausgewählt sind aus der Gruppe der Oxide und Oxidhydrate eines Elementes ausgewählt aus der Gruppe Bor, Aluminium, Gallium, Indium, Silizium, Germanium, Zinn, Titan, Zirkonium, Zink, Ytrium oder Eisen.

3. Formmassen gemäß Anspruch 2, wobei die nanodispersen Füllstoffe ausgewählt sind aus Siliziumdioxid und Siliziumdioxidhydrate.

4. Formmassen gemäß Anspruch 1, wobei die nanodispersen Füllstoffe in einer Menge von 0,1 bis 10 Gew.-%, bezogen auf die Gesamtmasse, zugesetzt werden.

5. Formmassen gemäß Anspruch 4, wobei die nanodispersen Füllstoffe in einer Menge von 0,5 bis 5 Gew.-% zugesetzt werden.

6. Formmassen gemäß Anspruch 1, wobei die mittlere Partikelgröße des Füllstoffes weniger als 1 Mikrometer.

7. Formmassen gemäß Anspruch 6, wobei die mittlere Partikelgröße des Füllstoffes weniger als 100 nm beträgt.

8. Formmassen gemäß Anspruch 7, wobei die mittlere Partikelgröße des Füllstoffes weniger als 50 nm beträgt.

9. Formmassen, erhältlich aus Formmassen gemäß Anspruch 1.

10. Ein- oder mehrschichtige Folien oder Hohlkörper, erhältlich aus Formmassen gemäß Anspruch 1.

11. Verpackungen, erhältlich aus einer Folien oder einem Hohlkörper gemäß Anspruch 10.

12. Verfahren zur Herstellung von Formmassen gemäß Anspruch 1, wobei die Füllstoffe bei der Herstellung des Polyamids eingearbeitet werden.

13. Verwendung von Formmasssen gemäß Anspruch 1 zur Herstellung von Formkörpern, ein- oder mehrschichtigen Folien oder Hohlkörpern.
